# EUROPÄISCHE PATENTANMELDUNG

(11) **EP 1 561 405 A1**
(43) Veröffentlichungstag der Anmeldung: **10.08.2005**
(21) Anmeldenummer: 04002672.6
(22) Anmeldetag: 06.02.2004
(51) Int. Cl.: A47G 19/12, A47J 27/21, A47J 41/00, B65D 47/26

(54) **Behälterdeckel und Kanne**

(71) Anmelder: Brita GmbH, 65232 Taunusstein (DE)
(72) Erfinder: WIRZ, Peter, 6043 Adligenswil (CH); LARSON, Mia, 6004 Luzern (CH)
(74) Vertreter: Fuchs Mehler Weiss & Fritzsche

(57) **Zusammenfassung**

Es wird ein Behälterdeckel 10 und eine Kanne 1 mit einem Behälterdeckel 10 beschrieben. Der Behälterdeckel 10 weist mindestens eine Einfüllöffnung 11 auf und besitzt einen Schieber 20, der von einer Schließstellung, in der die Einfüllöffnung 11 verschlossen ist, in eine Öffnungsstellung und umgekehrt verschiebbar ist. Der Schieber 20 erstreckt sich in Schließrichtung zum Rand 15 des Deckels 10 und geht in ein nach unten weisendes, abgewinkeltes Griffstück 30 über. Das Griffstück 30 liegt in Schließstellung an der Umfangswand 4 des Behälters 2 der Kanne 1 an, wodurch eine Platz sparende Anordnung geschaffen wird. Schieber 20 und Griffstück 30 sind einstückig ausgebildet, so dass die Bewegung des Schiebers 20 auch eine Bewegung des Griffstücks 30 bewirkt

## Beschreibung

Die Erfindung betrifft einen Behälterdeckel gemäß dem Oberbegriff des Anspruchs 1. Die Erfindung bezieht sich auch auf eine Kanne mit einem solchen Deckel.

Derartige Behälterdeckel finden sich auf allen Arten von Behältern für Flüssigkeiten, insbesondere für Getränke, um den Behälterinhalt abzuschließen und zu schützen. Die Behälter besitzen an der Behälterwand in der Regel einen Griff, mit dem der Behälter erfasst und beim Ausgießen gehalten werden kann.

Der Nachteil dieser bekannten Behälter besteht darin, dass der Griff an der Außenwand vorsteht und somit insbesondere in beengten Räumen, wie z. B. im Kühlschrank, sehr viel Platz beansprucht.

Eine Platz sparende Lösung ist aus der GB 2363056 bekannt. Es handelt sich um einen Wasserkocher, der einen Behälter mit Griff und Deckel aufweist. Um die Ausgussöffnung, die auch die Einfüllöffnung bildet, insbesondere während des Kochens von Wasser verschließen zu können, ist ein in horizontaler Richtung bewegbarer Schieber vorgesehen, der über ein Verschwenken des Griffs betätigt wird. Der Griff ist im Behälter derart schwenkbar angeordnet und an die Außenkontur des Behälters angepasst, dass er in eingeschwenkter Position in eine Ausnehmung eingreift und bündig mit der Außenfläche des Behälters abschließt.

Der Nachteil dieser Anordnung besteht darin, dass der Griff federnd gelagert sein muss und zur Umsetzung des Schwenkvorganges in eine Translationsbewegung des Schiebers einen Hebelmechanismus aufweisen muss. Da der Schieber im Deckel, der Griff aber am Behälter angeordnet ist, kann es bezüglich der Schiebefunktion des Schiebers zu Problemen beim Entfernen und wieder Aufsetzen des Deckels kommen.

Insbesondere bei Vorrichtungen zum Filtrieren von Wasser ist es jedoch erforderlich, das Filtermittel bzw. die entsprechende Kartusche von Zeit zu Zeit auszutauschen, so dass ein einfaches Entfernen des Deckels gewährleistet sein muss, ohne dass bei mehrmaligem Öffnen die Funktion des Schiebers und/oder des Griffs beeinträchtigt wird.

Es ist daher Aufgabe der Erfindung, einen Behälterdeckel und eine Kanne zur Verfügung zu stellen, die die oben genannten Nachteile vermeiden und bei Platz sparender Anordnung des Griffs ein problemloses Entfernen des Deckels ermöglichen, ohne dass die Funktion des im Deckel angeordneten Schiebers beeinträchtigt wird.

Diese Aufgabe wird dadurch gelöst, dass der Schieber sich in Schließstellung bis zum Rand des Behälterdeckels erstreckt und in ein nach unten weisendes, abgewinkeltes Griffstück übergeht.

Beim Bewegen des Schiebers in Öffnungsrichtung erstreckt sich der Schieber über den Rand des Behälterdeckels hinaus, so dass bei aufgesetztem Behälterdeckel erst in dieser Position auch das abgewinkelte Griffstück gegenüber dem Behälterrand und gegenüber der Behälterwand vorsteht. Damit wird eine Platz sparende Anordnung geschaffen.

Die Anordnung des Griffstücks am Schieber hat den weiteren Vorteil, dass Hebel, Gelenke oder dergleichen eingespart werden können, wodurch die Funktionssicherheit erhöht wird. Beim Entfernen des Behälterdeckels wird auch gleichzeitig das Griffstück entfernt. Ein mehrmaliges Aufsetzen und Entfernen des Behälterdeckels hat somit keinen Einfluss auf Schieber und Griffstück.

Der Ausguss des Behälters kann mit der Einfüllöffnung identisch sein. Weiterhin kann der Behälterdeckel eine Einfüllöffnung aufweisen, die beispielsweise benachbart des Ausgusses ist. In beiden Fällen kann in Öffnungsstellung das freie Ende des Schiebers die Einfüllöffnung frei geben. Bei dieser Ausgestaltung weist der Schieber selbst keine Einfüllöffnung auf.

Es ist auch möglich, die Einfüllöffnung beispielsweise mittig im Behälterdeckel anzuordnen und den Schieber mit einer eigenen Einfüllöffnung zu versehen. Wenn der Schieber in Öffnungsstellung gebracht wird, ist die Einfüllöffnung des Schiebers mit der Einfüllöffnung des Behälterdeckels deckungsgleich.

Vorteilhafterweise sind der Schieber und das Griffstück einstückig ausgebildet. Die einstückige Ausgestaltung erleichtert die Montage, weil nur eine Komponente mit dem Behälterdeckel verbunden werden muss. Eine Bewegung des Schiebers geht mit einer Bewegung des Griffstücks einher und umgekehrt, so dass die Funktionalität gegenüber Komponenten, die über Hebel oder Gelenke miteinander verbunden sind, deutlich verbessert wird. Die Betriebssicherheit wird dadurch ebenfalls verbessert.

Vorzugsweise bestehen Behälterdeckel und Schieber aus Kunststoff. Kunststoff bietet den Vorteil, dass die einstückige Ausbildung auf einfache Weise, beispielsweise im Spritzgussverfahren, möglich ist.

Andere Materialien, wie z. B. Metall, können ebenfalls zum Einsatz kommen.

Damit der Schieber von der Bedienungsperson beim Öffnen nicht versehentlich vom Behälterdeckel getrennt werden kann, ist in Öffnungsstellung ein im Behälterdeckel angeordneter erster Anschlag vorgesehen.

Auch in Schließstellung ist vorzugsweise ein im Behälterdeckel angeordneter zweiter Anschlag vorgesehen. Dadurch wird verhindert, dass der Schieber versehentlich zu weit eingeschoben wird, so dass das Griffstück unter Umständen an der Umfangswand des Behälters anschlägt und diese beschädigt.

Um einen sicheren Verschluss der Einfüllöffnung zu gewährleisten, sind vorzugsweise Rastmittel an Schieber und Behälterdeckel vorgesehen, die in Schließstellung ineinander greifen.

Vorzugsweise weisen der Behälterdeckel und/oder der Schieber einen Henkel auf. Dieser Henkel ragt vorzugsweise nach oben, so dass ein Behälter, an dem der Behälterdeckel befestigt ist, an diesem Henkel erfasst und gehalten werden kann. Auch dient der Henkel dazu, den Schieber beispielsweise aus der Schließ- in die Öffnungsstellung zu verschieben, um anschließend das Griffstück ergreifen zu können.

Der Henkel kann auch klappbar angeordnet sein.

Vorzugsweise ist der Schieber mittels zwei Schienen im Behälterdeckel gelagert. Die Schienen sind vorzugsweise am Schieber angeordnet und in am Behälterdeckel angeordneten Führungselementen gelagert. Der Vorteil von Schienen besteht darin, dass damit eine stabile Verbindung zwischen Schieber und Behälterdeckel gewährleistet wird, insbesondere im Hinblick darauf, dass der Griff am Schieber angeordnet ist und das gesamte Gewicht des Behälters über den Schieber in das Griffstück eingeleitet wird.

Um das Einfüllen der Flüssigkeit zu erleichtern, kann die Einfüllöffnung des Schiebers und/oder des Behälterdeckels von Trichterwänden umgeben sein. Die Trichterwände können alle am Behälterdeckel angeordnet sein, wobei der Schieber unter der Trichterwand oder den Trichterwänden verschiebbar angeordnet ist.

Zwei Trichterwände können auf dem Schieber angeordnet sein. Vorzugsweise sind zwei weitere Trichterwände auf dem Behälterdeckel vorgesehen. In Öffnungsstellung fluchten alle Trichterwände, so dass ein geschlossener Trichter gebildet wird.

Die Trichterwände laufen auf die Einfüllöffnung zu und können eben oder gewölbt ausgebildet sein.

Eine bevorzugte Verwendung eines solchen Behälterdeckels ist für einen Flüssigkeitsbehälter vorgesehen, insbesondere für einen Behälter für Getränke.

Eine weitere Verwendung des Behälterdeckels sieht die Verwendung für eine Wasserfiltereinrichtung vor. In diesem Fall befindet sich innerhalb des Behälters ein Einsatz, in dem eine Kartusche angeordnet ist. Das Wasser wird durch die Einfüllöffnung oder Einfüllöffnungen in eine obere Kammer eingefüllt, von wo aus das zu filtrierende Wasser durch die Kartusche in eine im unteren Bereich des Behälters angeordnete zweite Kammer läuft. Der Ausguss des Behälters ist mit der unteren Kammer verbunden.

Die Kanne ist dadurch gekennzeichnet, dass der Schieber sich in Schließstellung bis zum Rand des Behälterdeckels erstreckt und in ein nach unten weisendes, abgewinkeltes Griffstück übergeht. Das Griffstück erstreckt sich vorzugsweise parallel zur Umfangswand des Behälters, was den Vorteil hat, dass es in Schließstellung des Griffstückes an der Umfangswand des Behälters anliegen kann.

Der Behälter kann eine beliebige Form aufweisen, und im Querschnitt z. B. rechteckig und/oder oval sein.

In einer bevorzugten Ausführungsform weist die Umfangswand eine Einbuchtung auf, in die das Griffstück in Schließstellung eingreifen kann. Dadurch verschwindet das Griffstück teilweise oder vollständig und nimmt in Schließstellung keinen zusätzlichen Raum oder nur einen geringen Raum ein.

Vorzugsweise ist der Behälterdeckel auf den Behälter aufschiebbar und mit dem Behälterdeckel verrastbar.

Um einen sicheren Halt auf dem Behälterdeckel zu gewährleisten, kann der Behälterdeckel am Deckelrand mindestens zwei den Öffnungsrand des Behälters übergreifende Schürzen aufweisen.

Diese Schürzen können sich beidseitig vom Bereich des Ausgusses bis in den Seitenbereich des Behälterdeckels erstrecken. Diese Schürzen sind vorzugsweise mit Rastmitteln versehen, die mit entsprechenden Rastmitteln am Behälter zusammenwirken. Dadurch wird eine einfache und stabile Befestigung ermöglicht, wobei der Behälterdeckel auf einfache Weise vom Behälter entfernt werden kann, indem die Verrastung gelöst wird.

Vorzugsweise ist der Behälterdeckel von der Seite des Ausgusses auf den Behälter aufschiebbar und liegt an einem Anschlag an, wobei dieser Anschlag vorzugsweise durch einen Abschnitt der Schürzen gebildet wird. Das Aufschieben des Behälterdeckels von der Ausgussseite her hat den Vorteil, dass sich beim Ausgießen von Flüssigkeit aus der Kanne der Behälterdeckel nicht unbeabsichtigt vom Behälter lösen kann. Der gefüllte Behälter drückt hierbei mit seinem Gewicht gegen den Anschlag des Behälterdeckels und wird auf diese Weise sicher am Behälterdeckel, an dem auch der Griff über den Schieber angreift, gehalten.

Beispielhafte Ausführungsformen der Erfindung werden nachfolgend anhand der Zeichnungen näher erläutert.

Es zeigen
- Figur 1a: eine Kanne in perspektivischer Darstellung mit geschlossenem Schieber,
- Figur 1b: die in Figur 1a gezeigte Kanne mit geöffnetem Schieber,
- Figuren 2a, b: vergrößerte Darstellungen eines Längsschnittes durch den oberen Teil der in Figuren 1a und 1b gezeigte Kanne längs der Linie A-A und
- Figur 3: eine vergrößerte Darstellung eines Querschnittes durch den oberen Teil der in Figur 1a gezeigten Kanne längs der Linie B-B.

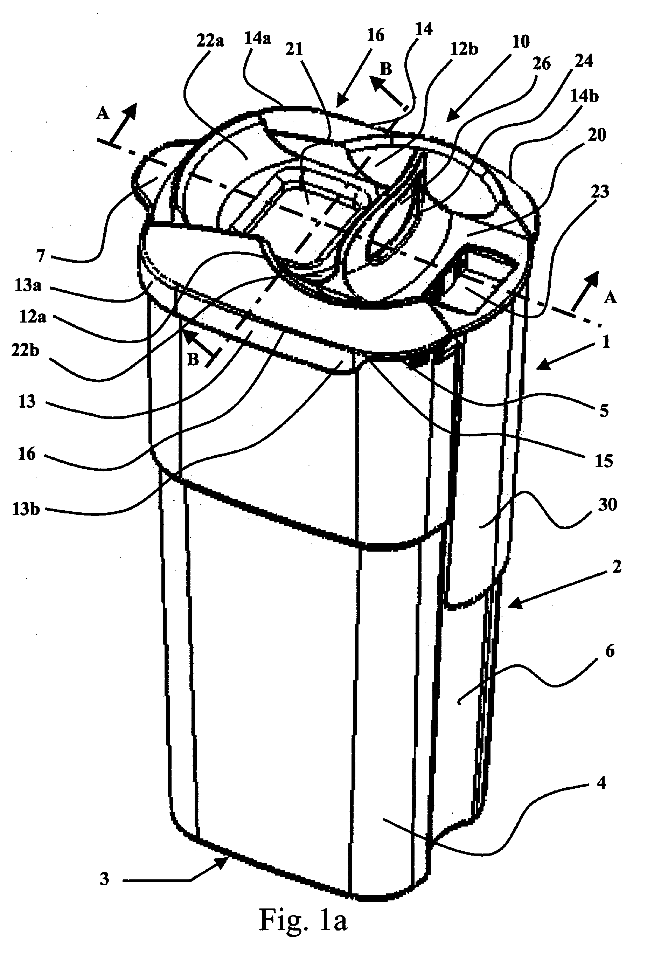

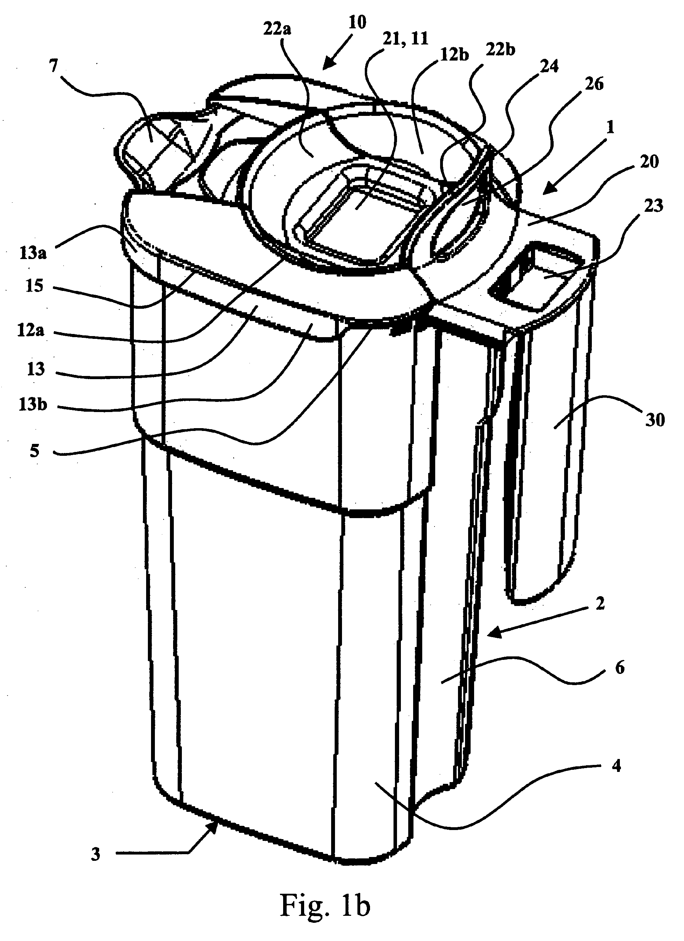

In der Figur 1 a ist eine Kanne 1 in perspektivischer Darstellung zu sehen. Die Kanne 1 besitzt einen im Querschnitt rechteckigen Behälter 2 mit einer Bodenwand 3 und einer Umfangswand 4, die abgerundete Ecken aufweist. Die Kanne weist ferner einen Ausguss 7 auf, durch den die Flüssigkeit ausgegossen werden kann. Der Behälter 2 und/oder der Behälterdeckel 10 können aus durchsichtigem Kunststoff bestehen. Auf dem Öffnungsrand 5 des Behälters 2 ist ein Behälterdeckel 10 lösbar befestigt, der einen Schieber 20 aufweist, der in der Deckelebene in horizontaler Richtung verschiebbar angeordnet ist.

Der Behälterdeckel 10 besitzt an seinem Deckelrand 15 zwei Schürzen 13, 14, wobei die Schürze 14 in Figur 1 a verdeckt ist. Die beiden Schürzen 13 und 14 erstrecken sich durchgehend vom Bereich des Ausgusses 7 bis in den Seitenbereich 16 des Behälterdeckels. In der hier gezeigten Darstellung werden die Schürzen im Wesentlichen durch die dem Ausguss benachbarten Abschnitte 13a, 14a und die seitlichen Abschnitte 13b, 14b gebildet. Die Abschnitte 13a, 14a dienen als Anschlag beim Aufschieben des Behälterdeckels 10.

Der Behälterdeckel 10 besitzt eine Einfüllöffnung 11 (siehe Figur 1b), die mittels des Schiebers 20 verschlossen wird. In der Figur 1a ist die Schließstellung dargestellt.

Der Schieber 20, der in der hier gezeigten Darstellung in Draufsicht rechteckig ausgebildet ist, besitzt ebenfalls eine Einfüllöffnung 21, die in Schließstellung gegenüber der Einfüllöffnung 11 des Behälterdeckels versetzt angeordnet ist, so dass die Einfüllöffnung 11 des Behälterdeckels verschlossen ist. Der Schieber besitzt zwei Trichterwände 22a, 22b, die in Öffnungsstellung mit den beiden Trichterwänden 12a und 12b zusammenwirken. Dies wird im Zusammenhang mit der Figur 1b beschrieben.

Nach oben ragt ein Henkel 24 vor, der eine im Wesentlichen kreisförmige Henkelöffnung 26 aufweist. Mittels des Henkels 24 kann die Kanne 1 nach oben angehoben oder auch der Schieber 20 verschoben werden.

Am Rand 15 des Behälterdeckels 10 geht der Schieber 20 einstückig in ein nach unten weisendes, abgewinkeltes Griffstück 30 über. Das Griffstück 30 ist stabförmig ausgebildet und erstreckt sich parallel zur Umfangswand 4 nach unten, wobei in der hier gezeigten Ausführungsform noch eine Einbuchtung 6 in der Umfangswand 4 vorgesehen ist, in die das Griffstück 30 hineinragt. Das Griffstück 30 steht nur geringfügig gegenüber dem Außenumfang der Umfangswand 4 vor, so dass damit eine Platz sparende Anordnung erzielt wird. Zwischen dem Henkel 24 und dem Griffstück 30 befindet sich im Schieber 20 noch eine Mulde 23, die ebenfalls dazu dienen kann, den Schieber von Schließrichtung in Öffnungsrichtung bzw. von Öffnungsrichtung in Schließrichtung zu verschieben oder beispielsweise zur Aufnahme einer Erschöpfungsanzeige für eine Filterelement (nicht dargestellt) dienen kann, wenn die Kanne z. B. als Wasserfiltereinrichtung ausgestattet ist.

In der Figur 1b ist die Kanne 1 gemäß Figur 1a in Öffnungsstellung dargestellt. Der Schieber 20 befindet sich in seiner ausgezogenen Stellung, in der das Griffstück 30 beabstandet zur Ausbuchtung 6 angeordnet ist.

Die Einfüllöffnung 11 ist mit der Einfüllöffnung 21 deckungsgleich, so dass Flüssigkeit eingefüllt werden kann. Alle Trichterwände 12a, 12b, 22a, 22b fluchten miteinander, so dass ein Einfülltrichter gebildet wird, der das Einfüllen der Flüssigkeit in die Kanne 1 erleichtert.

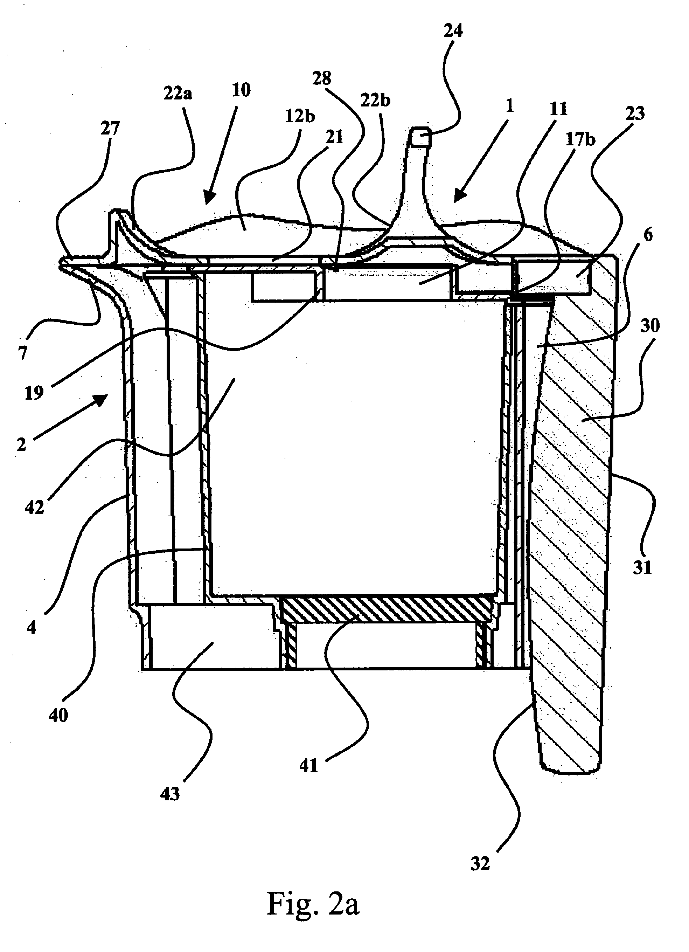

In der Figur 2a ist ein Schnitt längs der Linie A-A in Figur 1 dargestellt.

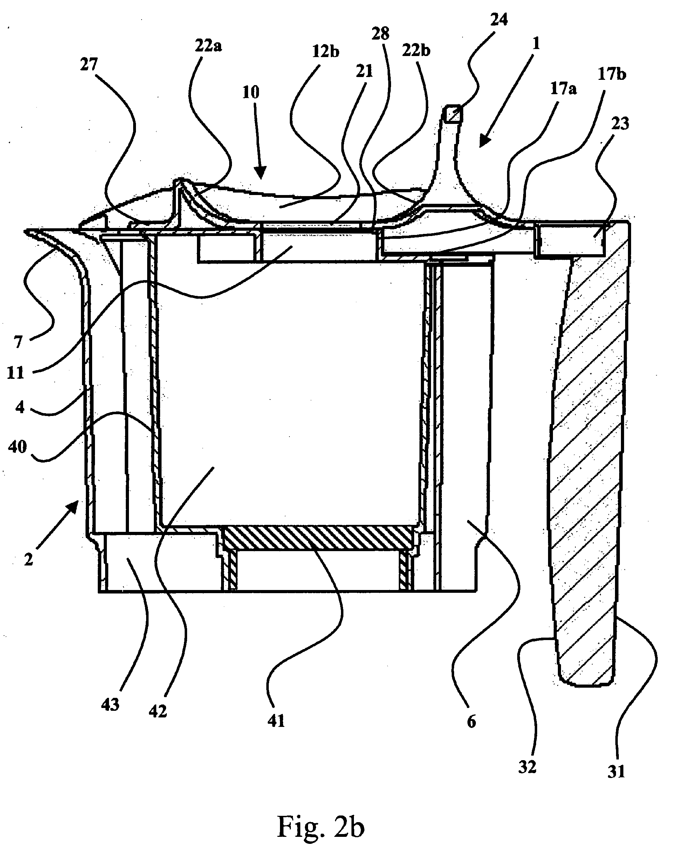

In diesem Ausführungsbeispiel bildet die Kanne 1 eine Wasserfiltereinrichtung. Dementsprechend ist in dem Behälter 2 ein Einsatz 40 angeordnet, in den wiederum eine Filterkartusche 41 eingesetzt ist. Da nur der obere Teil der Kanne 1 dargestellt ist, ist die Kartusche 41 in den Figuren 2a und 2b nur andeutungsweise zu sehen. Durch den Einsatz 40 wird eine obere Kammer 42 gebildet, in die das zu filtrierende Wasser von oben durch die Einfüllöffnung 11 eingefüllt wird.

Die Einfüllöffnung 11 des Behälterdeckels 10 wird durch eine Ringwand 19 gebildet.

Unterhalb des Einsatzes 40 befindet sich die zweite Kammer 43, in der das filtrierte Wasser gesammelt wird und über den Ausguss 7 ausgegossen werden kann.

Die Figur 2a zeigt die Schließstellung, in der die Einfüllöffnung 21 des Schiebers versetzt zur Einfüllöffnung 11 des Behälterdeckels angeordnet ist. Dadurch ist die Einfüllöffnung 11 vollständig verschlossen. Im Bereich des Ausgusses 7 befindet sich das freie Ende des Schiebers, das durch einen Flächenabschnitt 27 gebildet wird, der den Ausguss 7 ebenfalls verschließt.

Zwischen dem Flächenabschnitt 27 und der Einfüllöffnung 21 ist eine Erhöhung dargestellt, deren Innenwand die Trichterwand 22a bildet. Auf der gegenüberliegenden Seite ist die Trichterwand 22b angeformt, die in den Henkel 24 übergeht.

Rückseitig geht der Henkel 24 in die Mulde 23 und in das Griffstück 30 über, das eine gewölbte Außenfläche 31 und eine gewölbte Innenfläche 32 aufweist.

Es ist deutlich zu sehen, dass der Schieber 20 mit der Wand der Mulde 23 an einem Absatz anliegt, der den zweiten Anschlag 17b bildet. Ferner ist zu sehen, dass das Griffstück 30 in die Ausnehmung 6 eingreift. Das Griffstück 30 ist stabförmig ausgebildet.

In der Figur 2b ist die geöffnete Stellung dargestellt, in der die Einfüllöffnung 21 des Schiebers 20 über der Einfüllöffnung 11 des Behälterdeckels angeordnet ist. An der Unterseite des Schiebers ist eine Nase 28 angeformt, die an der Innenseite der Ringwand 19 anliegt, die somit den ersten Anschlag 17a bildet. Die Nase 28 verhindert, dass der Schieber 30 unbeabsichtigt vom Deckel 10 abgezogen wird.

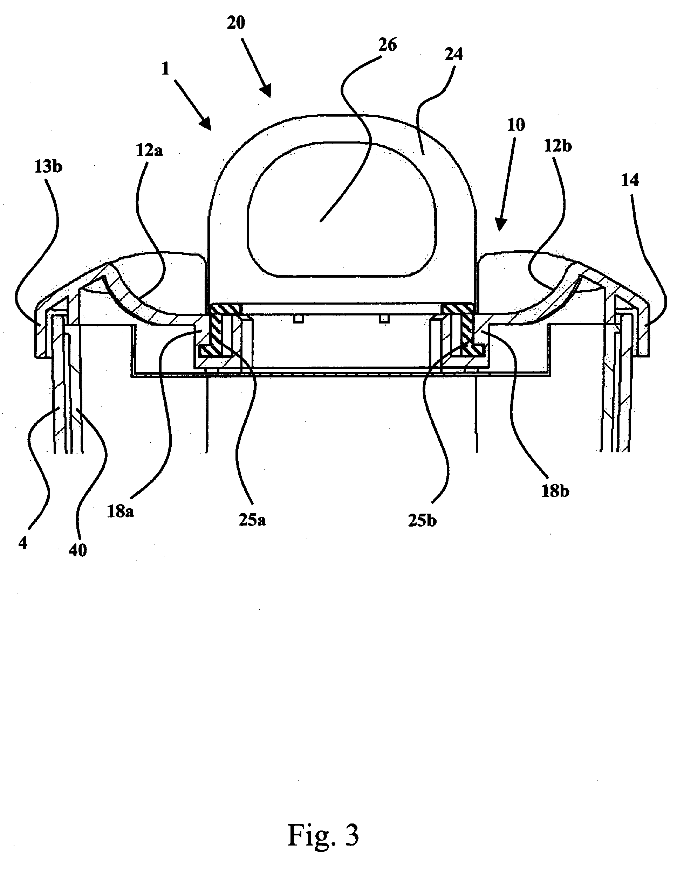

In der Figur 3 ist der obere Teil der Kanne 1 im Schnitt längs der Linie B-B in Figur 1a dargestellt. Der Schieber 20 besitzt an der Unterseite L-förmige Schienen 25a, 25b, die in Führungselemente 18a, b des Behälterdeckels 10 eingreifen und dort geführt werden. Diese Führungselemente 18a, b sind U-förmig ausgestaltet und besitzen entsprechende Nuten zur Aufnahme der jeweils nach außen weisenden L-förmigen Schienen 25a, b.

Rastmittel sind in den Figuren der Übersichtlichkeit halber nicht eingezeichnet worden.

### Bezugszeichenliste

- 1: Kanne
- 2: Behälter
- 3: Bodenwand
- 4: Umfangswand
- 5: Öffnungsrand
- 6: Einbuchtung
- 7: Ausguss
- 10: Behälterdeckel
- 11: Einfüllöffnung des Deckels
- 12a, b: Trichterwand
- 13: Schürze
- 13a, b: Schürzenabschnitt
- 14: Schürze
- 14a, b: Schürzenabschnitt
- 15: Deckelrand
- 16: Seitenbereich
- 17a: erster Anschlag
- 17b: zweiter Anschlag
- 18a,: b Führungselement
- 19: Ringwand
- 20: Schieber
- 21: Einfüllöffnung des Schiebers
- 22a, b: Trichterwand
- 23: Mulde für Erschöpfungsanzeige
- 24: Henkel
- 25a, b: Schiene
- 26: Henkelöffnung
- 27: Flächenabschnitt des Schiebers
- 28: Nase
- 30: Griffstück
- 31: gewölbte Außenfläche
- 32: gewölbte Innenfläche
- 40: Einsatz
- 41: Kartusche
- 42: obere Kammer
- 43: untere Kammer

## Patentansprüche

1. Behälterdeckel, der mindestens eine Einfüllöffnung (11) aufweist, mit einem Schieber (20), der in der Deckelebene von einer Schließstellung, in der die Einfüllöffnung (11) verschlossen ist, in eine Öffnungsstellung und umgekehrt verschiebbar ist, **dadurch gekennzeichnet, dass** der Schieber (20) sich in Schließstellung bis zum Rand (15) des Behälterdeckels (10) erstreckt und in ein nach unten weisendes, abgewinkeltes Griffstück (30) übergeht.

2. Behälterdeckel nach Anspruch 1, **dadurch gekennzeichnet, dass** der Schieber (20) eine Einfüllöffnung (21) aufweist, die in Öffnungsstellung mit der Einfüllöffnung (11) des Behälterdeckels (10) deckungsgleich ist.

3. Behälterdeckel nach Anspruch 1 oder 2, **dadurch gekennzeichnet, dass** Behälterdeckel (10) und Schieber (20) aus Kunststoff bestehen.

4. Behälterdeckel nach einem der Ansprüche 1 bis 3, **dadurch gekennzeichnet, dass** Schieber (20) und Griffstück (30) einstückig ausgebildet sind.

5. Behälterdeckel nach einem der Ansprüche 1 bis 4, **dadurch gekennzeichnet, dass** der Schieber (20) in Öffnungsstellung an einem im Behälterdeckel (10) angeordneten ersten Anschlag (17a) anliegt.

6. Behälterdeckel nach einem der Ansprüche 1 bis 5, **dadurch gekennzeichnet, dass** der Schieber (20) in Schließstellung an einem im Behälterdeckel (10) angeordneten zweiten Anschlag (17b) anliegt.

7. Behälterdeckel nach einem der Ansprüche 1 bis 6, **dadurch gekennzeichnet, dass** der Behälterdeckel (10) und der Schieber (20) Rastmittel aufweisen, die in Schließstellung ineinander greifen.

8. Behälterdeckel nach einem der Ansprüche 1 bis 7, **dadurch gekennzeichnet, dass** der Schieber (20) mittels zweier Schienen (25a, b) im Behälterdeckel (10) gelagert ist.

9. Behälterdeckel nach einem der Ansprüche 1 bis 8, **dadurch gekennzeichnet, dass** der Behälterdeckel (10) und/oder der Schieber (20) einen Henkel (24) aufweisen.

10. Behälterdeckel nach einem der Ansprüche 1 bis 9, **dadurch gekennzeichnet, dass** die Einfüllöffnung (11, 21) von Trichterwänden (12a, b, 22a, b) umgeben ist.

11. Behälterdeckel nach Anspruch 10, **dadurch gekennzeichnet, dass** zwei Trichterwände (22a, b) auf dem Schieber (10) angeordnet sind.

12. Verwendung eines Behälterdeckels nach einem der Ansprüche 1 bis 11 für einen Flüssigkeitsbehälter.

13. Verwendung eines Behälterdeckels nach einem der Ansprüche 1 bis 11 für eine Wasserfiltereinrichtung.

14. Kanne mit Behälter (2) aus Bodenwand (3) und Umfangswand (4) mit Ausguss (7) und mit Behälterdeckel (10) und Griff, wobei der Behälterdeckel (10) lösbar auf dem Behälter (2) befestigt ist und mindestens eine Einfüllöffnung (11) aufweist, wobei der Behälterdeckel (10) mit einem Schieber (20) versehen ist, der in der Deckelebene von einer Schließstellung, in der die Einfüllöffnung (11) verschlossen ist, in eine Öffnungsstellung und umgekehrt verschiebbar ist, **dadurch gekennzeichnet, dass** der Schieber (20) sich in Schließstellung bis zum Rand (15) des Behälterdeckels (10) erstreckt und in ein nach unten weisendes, abgewinkeltes Griffstück (30) übergeht.

15. Kanne nach Anspruch 14, **dadurch gekennzeichnet, dass** sich das Griffstück (30) parallel zur Umfangswand (4) erstreckt.

16. Kanne nach Anspruch 14 oder 15, **dadurch gekennzeichnet, dass** in Schließstellung das Griffstück (30) an der Umfangswand (4) anliegt.

17. Kanne nach einem der Ansprüche 14 bis 16, **dadurch gekennzeichnet, dass** die Umfangswand (4) eine Einbuchtung (6) aufweist, in die das Griffstück (30) in Schließstellung eingreift.

18. Kanne nach einem der Ansprüche 14 bis 17, **dadurch gekennzeichnet, dass** der Behälterdeckel (10) auf den Behälter (2) aufschiebbar und mit dem Behälter (2) verrastbar ist.

19. Kanne nach einem der Ansprüche 14 bis 18, **dadurch gekennzeichnet, dass** der Behälterdeckel (10) am Deckelrand (15) mindestens zwei den Öffnungsrand (5) des Behälters (2) übergreifende Schürzen (13, 14) aufweist.

20. Kanne nach Anspruch 19, **dadurch gekennzeichnet, dass** die Schürzen (13, 14) sich beidseitig vom Bereich des Ausgusses (7) bis in den Seitenbereich (16) des Deckelbehälters (10) erstrecken.

21. Kanne nach einem der Ansprüche 19 oder 20, **dadurch gekennzeichnet, dass** die Schürzen (13, 14) Rastmittel aufweisen, die mit Rastmitteln am Behälter (2) zusammenwirken.

22. Kanne nach einem der Ansprüche 14 bis 21, **dadurch gekennzeichnet, dass** der Behälterdeckel (10) von der Seite des Ausgusses (7) her auf den Behälter (2) aufschiebbar ist und an einem Anschlag anliegt.
